(19) Europäisches Patentamt
European Patent Office
Office européen des brevets

(11) **EP 2 573 528 A1**

(12) **EUROPEAN PATENT APPLICATION**
published in accordance with Art. 153(4) EPC

(43) Veröffentlichungstag:
**27.03.2013 Patentblatt 2013/13**

(51) Int Cl.:
***G01H 1/00*** *(2006.01)*

(21) Anmeldenummer: **10799136.6**

(86) Internationale Anmeldenummer:
**PCT/RU2010/000253**

(22) Anmeldetag: **20.05.2010**

(87) Internationale Veröffentlichungsnummer:
**WO 2011/145968 (24.11.2011 Gazette 2011/47)**

(84) Benannte Vertragsstaaten:
**AL AT BE BG CH CY CZ DE DK EE ES FI FR GB
GR HR HU IE IS IT LI LT LU LV MC MK MT NL NO
PL PT RO SE SI SK SM TR**

(71) Anmelder: **Advanced Vector Analytics Sia
1067 Riga (LV)**

(72) Erfinder:
• **PROKHOROV, Alexander Igorevich
Moscow 115304 (RU)**

• **SPERANSKIY, Anatoly Alekseevich
Moscow 105082 (RU)**

(74) Vertreter: **Jeck, Anton
Jeck - Fleck - Herrmann
Patentanwälte
Klingengasse 2/1
71665 Vaihingen/Enz (DE)**

(54) **VERFAHREN UND 3D-EMPFÄNGER ZUR MESSUNG EINES VEKTORS MECHANISCHER SCHWINGUNGEN**

(57) Die Erfindung betrifft ein Verfahren und einen 3D-Empfänger zur Messung eines mechanischen Schwingungsvektors.

Die Erfindung ist in der Messtechnik und insbesondere zur Kenndatenmessung von breitbandigen mechanischen Schwingungen verwendbar. Das Verfahren zum Empfang und zur Umsetzung des mechanischen Schwingungsvektors wird mit Hilfe eines 3D-Empfängers in Form einer dreikantigen gleichseitigen Pyramide ausgeführt, deren Flächen (1, 2, 3) zur Pyramidenbasis unter vorgegebenen Winkeln ($\varphi$) geneigt sind. Die trennbaren Empfangseinheiten (Sätze von Schwingungsmessfühlern) befinden sich im Mittelpunkt jeder Fläche (1, 2, 3), und zwar in einem bestimmten Punkt der Symmetrieachse der Flächen (1, 2, 3). Das ermöglicht, die Daten über die Vektorkomponenten räumlich, physisch und elektrisch im Messpunkt (0) zu überlagern und den Vektor der mechanischen Schwingungen zuverlässig zu messen. Die Erfindung kann zur Messung der Wellenparameter von mechanischen Schwingungen verschiedener Anlagen und Gegenstände im Bauwesen, im Maschinenbau, in der Akustik usw. verwendet werden.

Fig. 1

**Beschreibung**

Die Erfindung betrifft ein Verfahren und einen 3D-Empfänger zur Messung eines mechanischen Schwingungsvektors nach dem Oberbegriff der Ansprüche 1 und 2.

Die Erfindung ist in der Messtechnik und insbesondere in der Kenndatenmessung von breitbandigen mechanischen Schwingungen anwendbar. Die Erfindung kann zur Messung von Wellenparametern von mechanischen Schwingungen verschiedener Anlagen und Gegenstände im Bauwesen, Maschinenbau, in der Akustik usw. eingesetzt werden.

Bekanntlich gibt es zur Zeit verschiedene Verfahren zur Umsetzung der zu ermittelnden Kenndaten in ein messbares Signal mit unterschiedlicher physikalischer Herkunft (elektrisch, optisch usw.), um die Parameter der mechanischen Schwingungen messen zu können. Besonders oft werden zur Messung von mechanischen Schwingungen einfache (mit einem Messfühler) piezoelektrische Geber verwendet. Diese Geber messen den Schwingungsbeschleunigungsanteil (Vektor) um die Messachse des Bekanntlich gibt es zur Zeit verschiedene Verfahren zur Umsetzung der zu ermittelnden Kenndaten in ein messbares Signal mit unterschiedlicher physikalischer Herkunft (elektrisch, optisch usw.), um die Parameter der mechanischen Schwingungen messen zu können. Besonders oft werden zur Messung von mechanischen Schwingungen einfache (mit einem Messfühler) piezoelektrische Geber verwendet. Diese Geber messen den Schwingungsbeschleunigungsanteil (Vektor) um die Messachse des Gebers. Um die Größe und die Richtung des Schwingungsbeschleunigungsanteils (Vektors) zu messen, werden 2 oder 3 Messfühler verwendet, die in einem Gehäuse vereinigt sind. Zwei Messfühler ermöglichen es, die Richtung des Schwingungsbeschleunigungsvektors in einer Ebene zu ermitteln. Drei orthogonale Messfühler ermöglichen die Ermittlung der Größe und der räumlichen Richtung des Vektors.

Bei kritischen Messungen sind sog. "Dreikomponentenzerhacker" weit verbreitet. Dabei handelt es sich um drei orthogonal ausgerichtete (monoskopische oder Skalar-) Einkomponentengeber in einem gemeinsamen Gehäuse ("3 in 1 "). Bei dieser technischen Lösung sind die Messfühler der Geber, streng gesagt, räumlich, physisch und elektrisch auseinandergesetzt. Die mit ihrer Hilfe messbaren Bestandteile des Vektors können wesentliche Phasenaussortierungen in Bezug auf die messbaren Kennwerte aufweisen. Neben den eingebrachten Phasenaus-sortierungen haben die piezoelektrischen Kristalle der Einkomponentengeber ihre eigene verfahrenstechnisch bedingte Matrix einer tensoriellen Umsetzung. Diese Matrix verleiht jedem Geber individuelle Parameter einer Querempfindlichkeit. Deswegen können die Messungen von drei Einkomponentengebem, die in einem Gehäuse eingebaut sind, den Projektionen des Schwingungsbeschleunigungsvektors nicht gleichgestellt werden, denn sie verzerren sowohl die Größe als auch die Richtung des Vektors der Messschwingungen. Um die zu messenden Bestandteile des Vektors zeitmäßig anzupassen (zu synchronisieren), bauen die Hersteller integrierte Konditionieranordnungen, wie z. B. KSVISOTRON, ein.

Die Aussagefähigkeit der messtechnischen Schaltung des Dreikomponentengebers, der aus drei Einkomponentengebern besteht, wird ebenfalls von der präzisen orthogonalen Anordnung der Messachsen der Einkomponentengeber im gemeinsamen Gehäuse beeinflusst.

Die Welle der messbaren räumlichen Schwingung in einem Messpunkt wird an den "3 in 1"- Geber über eine Zug- und Druck-Umsetzung gesendet, wobei seine Messachse Z senkrecht zum Gehäuseboden steht. Diese Welle wird auch an zwei andere Geber über eine Abscher-Umsetzung gesendet, wobei die Messachsen dieser X- und Y-Achsen zum Gehäuseboden parallel liegen. Physikalisch unterscheiden sich diese Abläufe nicht nur durch die linearen Koeffizienten der tensoriellen Umsetzungsmatrix, was durch eine Nachabstimmung der Verstärkungs-werte berücksichtigt werden kann. Sie unterscheiden sich auch durch ein Resonanzfrequenzgefälle bei normalen Verformungen (Längsverformungen) und tangentialen Verformungen (Querverformungen) des gemeinsamen Gehäuses.

Die Längs- und Querresonanzzustände hängen gemäß folgendem Verhältnis zusammen:

$$f_{(Querresonanz)} = f_{(y\text{- }Resonanz)} = f_{(x\text{- }Resonanz)} = (1/3)\, f_{(z\text{- }Resonanz)} = (1/3)\, f_{(Längsresonanz)}$$

In der Metrologie gilt, dass der lineare Arbeitsfrequenzbereich innerhalb von 0,7 zur niedrigsten Resonanzfrequenz liegt. Im vorliegenden Fall liegt der lineare Arbeitsfrequenzbereich also innerhalb von 0,7 zur $f_{(Querresonanz)}$. Folglich wird der Arbeitsfrequenzbereich eines solchen Gebers um die X- und Y-Achsen ca. 20 % des Arbeitsfrequenzbereichs um die Z-Achse betragen. Somit sind die Resonanz-eigenschaften des Übertragungsmediums um die Orthogonalachsen ein Beschränkungsfaktor bei der Bestimmung des Frequenzbereichs für zuverlässige Messungen der vektormäßigen Diagnoseparameter.

Durch die RU 2229136 ist ein Dreikomponenten-Schwingungs-Beschleunigungsmessgerät (Akzelerometer) mit einem Messfühler bekannt. In dieser Einrichtung wird eine (Z) der drei orthogonalen Messkomponenten mittels einer physikalischen "Zug-Druck"-Umsetzung ermittelt. Die zwei anderen Messkomponenten (X und Y) werden mittels "Abscher"-Umsetzung im Messfühler ermittelt. Da die Resonanzfrequenzen der "Zug-Druck"-Vorgänge ($f_{z\text{- }Resonanz}$ = 25-28 kHz) und der Resonanzfrequenzen der "Abscher"-Vorgänge ($f_{x, y\text{- }Resonanz}$ = 6-8 kHz) sich wesentlich unterscheiden, ist ihre Anwendbarkeit zwecks zuverlässiger Wiederherstellung der vektormäßigen Diagnoseparameter auf Frequenzen von 3 - 4 kHz beschränkt.

Somit realisieren die Geber nach der Patentschrift RU 2229136 anstelle des angesagten Frequenzbereichs von 10 Hz bis 15 kHz praktisch nur die vektormäßigen Eigenschaften bis zu 3 kHz (20 % des angemeldeten Bereichs). Der Vorteil der technischen Lehre gemäß RU 2229236 ist eine simultane elektrische Umsetzung (Messung) der Komponenten. Das heißt, die Vektorprojektionen um die Messachsen des Messfühlers des Gebers werden gleichzeitig gemessen. Jedoch ist die Abscherebene um eine solche Größe in Bezug auf den Messpunkt des Gegenstands verschoben, die mit der Größe des Messfühlers vergleichbar ist. Nur die Z- Messachse ("Zug - Druck") fällt mit dem Messpunkt zusammen. Die "Abscherachsen" X und Y und der Messpunkt liegen sowohl physisch als auch räumlich auseinander. Darüber hinaus bedingt das prozessungerechte System für eine unsymmetrische Ladungsabführung eine niedrige Reproduzierbarkeit des Gebers.

Der nächstkommende Stand der Technik gegenüber dem erfindungsgemäßen Verfahren zur genauen Messung des mechanischen Schwingungsvektors ist ein Verfahren nach dem Patent RU 2383025. Hier ist eine Einrichtung mit drei Messfühlern offenbart. Die Messfühler sind als piezoelektrische oder biforme Platten ausgebildet, die fliegend an einem gemeinsamen Gehäuse starr befestigt sind. Das Gehäuse ist in Form einer dreikantigen Pyramide mit drei orthogonalen Flächen ausgebildet. Die drei Messfühler sind nahe zum Messpunkt angeordnet. Anhand dieser drei Messfühler wird der Schwingungsbeschleunigungsvektor in drei orthogonale Anteile (Komponenten) zerlegt. Die Messung dieser Anteile ermöglicht es, den eigentlichen Wert und die Richtung des messbaren Vektors zu ermitteln.

Es ist Aufgabe der Erfindung, ein Verfahren und einen 3D-Empfänger zu entwickeln, die zum kombinierten Empfang und zur systemumfassenden Umsetzung der Komponenten der messbaren mechanischen Schwingungen innerhalb des gesamten Bereichs der Diagnoseparameter eines Gegenstands verwendbar sind. Dieses Verfahren und der 3D-Empfänger sollen allen Anforderungen an die Zuverlässigkeit der Messung der Vektorkomponenten Rechnung tragen.

Die gestellte Aufgabe wird durch die Merkmale der Ansprüche 1 und 2 gelöst.

Die elektrischen Signale werden von den Messfühlern des 3D-Empfängers der mechanischen Schwingungen abgetastet. Die Messfühler liegen an den Flächen des Gehäuses. Diese Flächen bilden eine dreikantige gleichseitige Pyramide mit zum Gehäuseboden (Pyramidenbasis) gleich geneigten Flächen. In der Mitte jeder Fläche befindet sich je ein Satz Schwingungsmessfühler. Dieser Satz liegt jeweils in einem bestimmten Punkt der Symmetrieachse der Fläche. Der Satz der Schwingungsmessfühler dient als ein Knoten für Empfang, Umsetzung und Aufnahme des Spektrums der messbaren Schwingungen. Die Messachsen jedes der drei Sätze der Schwingungsmessfühler liegen senkrecht zur Ebene ihrer jeweiligen Fläche und schneiden sich im Mittelpunkt der Pyramidenbasis, der mit dem Messpunkt des Empfängers zusammenfällt. Somit kommt eine physisch und elektrisch zusammenhängende simultane Umsetzung der räumlichen Schwingungen in Richtung der drei räumlich verbundenen Messachsen zustande. Die Besonderheit des Verfahrens ist die Anwendung von einem Satz Schwingungsmessfühler für eine physikalisch und mechanisch gleichartige "Zug-Druck"-Umsetzung in einer messtechnischen Schaltung. Dies ermöglicht es, bei symmetrischer Kreisanordnung der Messachsen zum Befestigungspunkt des 3D-Empfängers die systemumfassenden Anforderungen an die vektoriellen Phasenmessungen zu erfüllen.

Jeder Satz der Schwingungsmessfühler realisiert eine 1D-lineare präzise Schwingungsumsetzung mit den Koeffizienten der tensoriellen Matrix bei niedriger Querempfindlichkeit der Sensoren. Die Vorselektierung der Sensoren für den Satz der Schwingungsmessfühler ermöglicht es, eine hohe Reproduzierbarkeit der technischen Kenndaten im Allgemeinen sicherzustellen und die Fertigungsgerechtheit zu verbessern. Die getrennte Herstellung der Sätze von Schwingungsmessfühlern in Form von funktionellen Baugruppen bedarf keiner nachfolgenden Einrichtung. Das vereinfacht wesentlich den Ablauf beim Zusammenbau des 3D-Empfängers. Die drei "durch die Pyramide gemessenen" und räumlich und zeitlich verbundenen Vektorprojektionen können affin in die drei Vektorprojektionen im kartesischen Koordinatensystem des Überwachungsziels umgesetzt werden.

Das technische Ergebnis der Ausführung der Erfindung ist die Entwicklung eines Verfahrens und eines 3D-Empfängers zum Empfang und zur gleichzeitigen tensoriellen Umsetzung der Komponenten der messbaren mechanischen Schwingungen innerhalb des gesamten Bereichs der Diagnoseparameter eines Zielgegenstands. Das Verfahren erfüllt alle grundsätzlichen Anforderungen an die Zuverlässigkeit der Messungen der Schwingungsvektorkomponenten:

a) Die messbaren Komponenten sind räumlich miteinander verbunden, da die Messachsen der Sätze der Schwingungsmessfühler sich baumäßig dank der symmetrischen Kreisanordnung in einem gemeinsamen Punkt der Basis des isotropen Empfängergehäuses kreuzen.

b) Die messbaren Komponenten sind physisch miteinander verbunden, da der gemeinsame Schnittpunkt der Achsen des Satzes von Schwingungsmessfühlern und der Messpunkt der Befestigung des Empfängers an der Umrissoberfläche des Überwachungsgegenstands zusammenfallen.

c) Die messbaren Komponenten sind elektrisch miteinander verbunden, da die Sätze der Schwingungsmessfühler zum Messpunkt äquidistant liegen. Sie setzen die Schwingungsfronten gleichzeitig in Ladungen um, um nachher die Diagnoseparameter in einer vektoriellen Form zu bekommen.

d) Die Komponentenmessungen sind in Bezug auf die Resonanzkenndaten abgestimmt, da in der messtechnischen Schaltung die Sätze der Schwingungsmessfühler für eine physikalisch und mechanisch gleichartige "Zug-Druck"-Umsetzung verwendet werden.

e) Der 3D-Empfänger und seine messtechnische Schaltung sind fertigungsgerecht, da eine hohe Reproduzierbarkeit der technischen Kenndaten der Sensorensätze sichergestellt ist.

Der Vergleich des Stands der Technik und des erfindungsgemäßen Verfahrens ergibt folgende gemeinsame Merkmale: Der Empfang und die Umsetzung der Vektorprojektionen der messbaren Schwingungen erfolgt mit Hilfe von drei gleichartigen Empfängern für mechanische Schwingungen. Die Empfänger liegen in den orthogonalen Flächen, welche eine dreikantige gleichseitige Pyramide mit den zum Gehäuseboden gleich geneigten Flächen bilden.

Die wesentlichen kennzeichnenden Merkmale der Erfindung sind wie folgt:

Das erfindungsgemäße Verfahren zum Empfang und zur Umsetzung der Komponenten des mechanischen Schwingungsvektors wird mit Hilfe von drei gleichartigen Empfängern für mechanische Schwingungen ausgeführt. Die Empfänger befinden sich auf den Flächen, welche eine dreikantige gleichseitige Pyramide bilden. Die Flächen der Pyramide sind zu ihrer Basis unter vorgegebenen gleichen Winkeln φ geneigt. Die trennbaren Empfänger (Sätze der Schwingungsmessfühler) befinden sich in der Mitte jeder Fläche und zwar in einem bestimmten Punkt der Symmetrieachse der Fläche. Dabei kreuzen sich die Messachsen der Sätze der Schwingungsmessfühler in einem gemeinsamen Messpunkt in der Mitte der Basis des 3D-Empfängers. Diese Maßnahme sorgt dafür, dass die Daten über die Vektorkomponenten sich räumlich, physisch und elektrisch überlappen. Somit kann der Vektor der mechanischen Schwingungen im Messpunkt zuverlässig gemessen werden.

Die Erfindung ist neu, denn die Anmelder haben keine Nachweise über die Anwendung eines gleichen Verfahrens und einer Einrichtung mit dem gleichen Bestimmungszweck finden können.

Darüber hinaus sind den Anmeldern keine technischen Lösungen bekannt, deren Merkmale den kennzeichnenden Merkmalen des erfindungsgemäßen Verfahrens und der erfindungsgemäßen Einrichtung gleichen. Deswegen weist die technische Lösung nach Meinung der Anmelder eine erforderliche Erfindungshöhe auf.

Die Erfindung kann zur Messung der mechanischen Vibrationsparameter verschiedener Anlagen und Gegenstände im Bauwesen, im Maschinenbau, in der Akustik usw. angewendet werden. Die Erfindung ist gewerblich anwendbar.

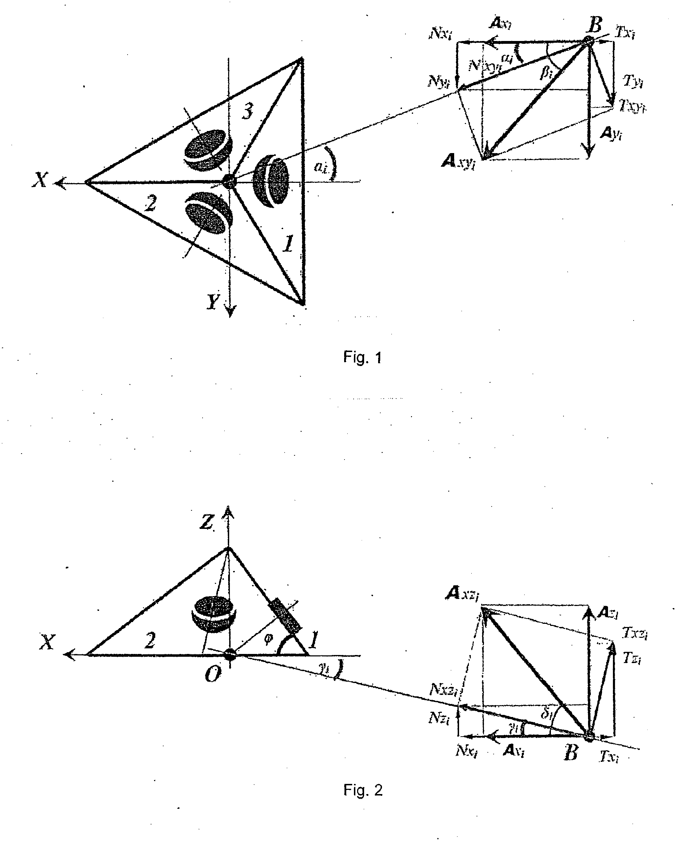

Die Erfindung wird anhand der Zeichnungen in den Fig. 1 und 2 näher erläutert. Die Figuren enthalten schematische Darstellungen des 3D-Empfängers zur Ausführung des Verfahrens zur genauen gleichzeitigen Ermittlung von 3 Komponenten eines mechanischen Schwingungsvektors. Es zeigen:

Fig. 1 - die Draufsicht des 3D-Empfängers zur Ausführung des erfindungsgemäßen Verfahrens, wobei

$$Axy_i^2 = Ax_i^2 + Ay_i^2$$
$$Ax_i = Axy_i \, Cos\,\beta_i \qquad Ay_i = Axy_i \, Sin\beta_i$$
$$Ax_i = Nx_i - Tx_i \qquad Ay_i = Ny_i + Ty_i$$
$$Axy_i^2 = Nxy_i^2 + Txy_i^2$$
$$Nxy_i^2 = Nx_i^2 + Ny_i^2 \quad Txy_i^2 = Tx_i^2 + Ty_i^2$$
$$Nx_i = Nxy_i \, Cos\,\alpha_i \qquad Ny_i = Nxy_i \, Sin\,\alpha_i$$
$$Tx_i = Txy_i \, Sin\,\alpha_i \qquad Ty_i = Txy_i \, Cos\,\alpha_i \qquad\qquad A_i^2 = Axy_i^2 + Az_i^2 \qquad O(X,Y,Z)$$

bedeuten und

Fig. 2 - die Seitenansicht des 3D-Empfängers zur Ausführung des erfindungsgemäßen Verfahrens, wobei

$$Axz_i^2 = Ax_i^2 + Az_i^2$$
$$Ax_i = Axz_i \, Cos\,\delta_i \qquad Az_i = Axz_i \, Sin\,\delta_i$$
$$Ax_i = Nx_i - Tx_i \qquad Az_i = Nz_i + Tz_i$$
$$Axz_i^2 = Nxz_i^2 + Txz_i^2$$
$$Nxz_i^2 = Nx_i^2 + Nz_i^2 \quad Txz_i^2 = Tx_i^2 + Tz_i^2$$
$$Nx_i = Nxz_i \, Cos\,\gamma_i \qquad Nz_i = Nxz_i \, Sin\,\gamma_i$$
$$Tx_i = Txz_i \, Sin\,\gamma_i \qquad Tz_i = Txz_i \, Cos\,\gamma_i$$

bedeuten.

In den Fig. 1 und 2 sind folgende Bezugszeichen verwendet:

1,2,3 - die Flächen des Gehäuses des 3D-Empfängers,
B - die Schwingungsquelle,
O - der Messpunkt des Empfängers,
A - die schwingende Beanspruchung,
N - die normalen Komponenten,
T - die tangentialen Komponenten,
α - die Peilung der Quelle B in der XY-Ebene,
y - die Peilung der Quelle B in der XZ-Ebene,
β, ö - die 3D-Ausrichtung der Beanspruchung,
i - die Piezo-Empfangssorensensätze $i$ = 1, 2, 3 und
φ - der Neigungswinkel der Fläche zur Basis

Das Verfahren zum 3D-Empfang und zur gleichzeitigen Umsetzung der Parameter der mechanischen Schwingungen ist in folgender Weise ausgeführt.

Die Wellen der räumlichen mechanischen Schwingungen gehen von den Quellen B der auf den Gegenstand einwirkenden Störungen aus und kommen gemäß den Gesetzen und Grundsätzen der Kontinuumsmechanik in einem Punkt auf der Umrissoberfläche des Überwachungsgegenstands an. In diesem Punkt werden die Messungen vorgenommen. Wird der 3D-Empfänger in diesem Punkt angeordnet, so wird er als Messpunkt bezeichnet und wird seinerseits zu einer lokalen Quelle für eine dynamische Überlagerung der räumlichen Schwingungen, welche das Schwingungsspektrum an den Satz der Schwingungsmessfühler übertragen. Dank der symmetrischen und zur Basis des isotropen Gehäuses zentrierten äquidistanten Kreisanordnung der Sensorensätze in Bezug auf den Messpunkt erreicht das Schwingungswellenspektrum gleichzeitig (synchron) die Messfühler aller (drei) Sätze der Schwingungsmessfühler. Die Messfühler erledigen eine simultane tensorielle Umsetzung der Vektorprojektionen der messbaren Schwingungen. Danach lässt sich das Vektorspektrum zeitlich sowohl nach der Größe als auch nach der räumlichen Richtung leicht rekonstruieren. Das Empfangsverfahren realisiert den Effekt einer "Fokussierung" der Daten, welche aus dem Messpunkt an den Satz der Schwingungsmessfühler nicht nur räumlich und elektrisch sondern auch physisch übertragen werden.

Die Matrix zur Umrechnung der 1D-Projektionen um die orthogonalen Messachsen der Sätze der Schwingungsmessfühler in das orthogonale Koordinatensystem des 3D-Empfängers ist:

| Koordinatenachse des 3D Empfängers | 1D-Projektion um Achse 1 | 1D-Projektion um Achse 2 | 1 D-Projektion um Achse 3 |
|---|---|---|---|
| **X** | - Sin φ | Sin φ Cos60° | Sin φ Cos60° |
| **Y** | 0 | Sin φ Sin60° | - Sin φ Sin60° |
| **Z** | Cos φ | Cos φ | Cos φ |

Die messbaren Komponenten der Projektion der Einwirkung A im Koordinatensystem des 3D-Empfängers sind durch die folgenden Gleichungen korreliert:

| Einwirkung | Messbare Komponenten von 1D-Projektion A um Achse 1 | Messbare Komponenten von 1D-Projektion A um Achse 2 | Messbare Komponenten von 1D-Projektion A um Achse 3 |
|---|---|---|---|
| $Az_i$ | ($\textbf{\textit{N}}$ $xz_i$ x Sin $\gamma_i$ + T $xz_i$ x Cos $\gamma_i$) Cos φ | ($\textbf{\textit{N}}$ $xz_i$ x Sin $\gamma_i$ + T $xz_i$ x Cos $\gamma_i$) Cos φ | ($\textbf{\textit{N}}$ $xz_i$ x Sin $\gamma_i$ + T $xz_i$ x Cos $\gamma_i$) Cos φ |
| $Ax_i$ | ($N$ $xy_i$ x Cos $\alpha_i$ - T $xy_i$ x Sin $\alpha_i$) Sin φ | ($N$ $xy_i$ x Cos $\alpha_i$ - T $xy_i$ x Sin $\alpha_i$) Sin φ Cos60° | ($N$ $xy_i$ x Cos $\alpha_i$ - T $xy_i$ x Sin $\alpha_i$) Sin φ Cos60° |
| $Ax_i$ | ($\textbf{\textit{N}}$ $xz_i$ x Cos $y_i$ - T $xz_i$ x Sin $\gamma_i$) Sin φ | ($\textbf{\textit{N}}$ $xz_i$ x Cos $\gamma_i$ - T $xz_i$ x Sin $\gamma_i$) Sin φ Cos60° | ($\textbf{\textit{N}}$ $xz_i$ x Cos $\gamma_i$ - T $xz_i$ x Sin $\gamma_i$) Sin φ Cos60° |
| $Ay_i$ | 0 | ($N$ $xy_i$ x Sin $\alpha_i$ + T xy; x Cos $\alpha_i$) Sin φ Sin60° | -($N$ $xy_i$ x Sin $\alpha_i$ + T $xy_i$ x Cos $\alpha_i$) Sin φ Sin60° |

Dabei entspricht:

$$A\,x_i = A\,xy_i \times Cos\,\beta_i = \sqrt{(N\,xy_i^2 + T\,xy_i^2)} \times Cos\,\beta_i = \sqrt{(Nx_i^2 + Ny_i^2 + Tx_i^2 + Ty_i^2)} \times Cos\,\beta_i$$

$$A\,x_i = (Nx_i - Tx_i) = (N\,xy_i \times Cos\,\alpha_i - T\,xy_i \times Sin\,\alpha_i)$$

$$A\,y_i = A\,xy_i \times Sin\,\beta_i = \sqrt{(N\,xy_i^2 + T\,xy_i^2)} \times Sin\,\beta_i = \sqrt{(Nx_i^2 + Ny_i^2 + Tx_i^2 + Ty_i^2)} \times Sin\,\beta_i$$

$$A\,y_i = (Ny_i + Ty_i) = (N\,xy_i \times Sin\,\alpha_i + T\,xy_i \times Cos\,\alpha_i)$$

$$A\,x_i = A\,xz_i\,Cos\,\delta_i = \sqrt{(N\,xz_i^2 + T\,xz_i^2)} \times Cos\,\delta_i = \sqrt{(Nx_i^2 + Ny_i^2 + Tx_i^2 + Ty_i^2)} \times Cos\,\delta_i$$

$$A\,x_i = (Nx_i - Tx_i) = (N\,xz_i \times Cos\,\gamma_i - T\,xz_i \times Sin\,\gamma_i)$$

$$A\,z_i = A\,xz_i \times Sin\,\delta_i = \sqrt{(N\,xz_i^2 + T\,xz_i^2)} \times Sin\,\delta_i = \sqrt{(Nx_i^2 + Ny_i^2 + Tx_i^2 + Ty_i^2)} \times Sin\,\delta_i$$

$$A\,z_i = (N\,z_i + T\,z_i) = (N\,xz_i \times Sin\,\gamma_i + T\,xz_i \times Cos\,\gamma_i)$$

**Patentansprüche**

1. Verfahren zur zuverlässigen Ermittlung eines Schwingungsvektors von breitbandigen mechanischen Schwingungen einschließlich einer gleichzeitigen Messung von drei Komponenten des mechanischen Schwingungsvektors mit Hilfe von Messfühlern, die auf den Flächen (1, 2, 3) eines Gehäuses eines 3D-Empfängers angeordnet sind, wobei diese Flächen (1, 2, 3) eine dreikantige Pyramide bilden,
**dadurch gekennzeichnet,**
**dass**, um die Messgültigkeit zu erhöhen, die mechanische Schwingung aus dem Empfangspunkt über ein isotropes Gehäuse des 3D-Empfängers gleichzeitig bei den Messfühlern ankommt, welche am Empfängergehäuse symmetrisch und äquidistant zum Messpunkt (0) des Überwachungs-gegenstands angeordnet sind,
**dass** in den Messfühlern eine tensorielle Umsetzung der messbaren Schwingungen durch gleichartige "Zug-Druck"-Umsetzungsvorgänge in Richtung von sich im Messpunkt (0) kreuzenden Messachsen in Signale erfolgt, welche den drei Komponenten des mechanischen Schwingungsvektors proportional sind, wobei die mechanischen Schwingungen in Richtung der Messachsen zerlegt sind, welche im Messpunkt (0) räumlich, physisch und elektrisch zusammenfallen, wodurch es ermöglicht wird, die Größe des Vektors der mechanischen Schwingungen zu ermitteln und seine räumliche Ausrichtung zu rekonstruieren.

2. Einrichtung mit einem 3D-Empfänger, der mechanische Schwingungen zur breitbandigen Messung des Schwingungsvektors mit drei Messfühlern aufweist, die auf den Flächen (1, 2, 3) eines isotropen Gehäuses eines 3D-Empfängers befestigt sind, wobei diese Flächen (1, 2, 3) zum Gehäuseboden gleich geneigt sind und eine dreikantige gleichseitige Pyramide bilden, deren Basis den Gehäuseboden des 3D-Empfängers darstellt,
**dadurch gekennzeichnet,**
**dass**, um die Messgenauigkeit zu erhöhen und die Fertigungsgerechtheit bei der Herstellung des 3D-Empfängers zu verbessern, die Messfühler in Form von trennbaren Empfangseinheiten, und zwar in Form von Sätzen von Schwingungsmessfühlern, ausgebildet sind, wobei diese Sätze von Schwingungsmessfühlern symmetrisch und äquidistant zum Messpunkt (0) des 3D-Empfängers in einem Kreis angeordnet sind,
**dass** der Messpunkt (0) dabei mit dem geometrischen Mittelpunkt des Gehäusebodens des 3D-Empfängers zusammenfällt.
**dass** dabei der gemeinsame Schnittpunkt der Messachsen der Sätze von Schwingungsmessfühlern und die Aufnahmestellen der Sätze von Schwingungsmessfühlern jeweils an der Symmetrieachse jeder Fläche (1, 2, 3) angeordnet sind und
**dass** die Messachsen der Messfühler dabei eine in Bezug auf die Empfängerflächen (1, 2, 3) spiegelgleiche Pyramide bilden, deren Spitze im Messpunkt (0) des 3D-Empfängers liegt.

Fig. 1

Fig. 2

## INTERNATIONAL SEARCH REPORT

| International application No |
|---|
| PCT/RU2010/000253 |

**A. CLASSIFICATION OF SUBJECT MATTER**

INV. G01H1/00
ADD.

According to International Patent Classification (IPC) or to both national classification and IPC

**B. FIELDS SEARCHED**

Minimum documentation searched (classification system followed by classification symbols)

G01H  G01V

Documentation searched other than minimum documentation to the extent that such documents are included in the fields searched

Electronic data base consulted during the international search (name of data base and, where practical, search terms used)

EPO-Internal

**C. DOCUMENTS CONSIDERED TO BE RELEVANT**

| Category* | Citation of document, with indication, where appropriate, of the relevant passages | Relevant to claim No. |
|---|---|---|
| X | EP 2 034 275 A1 (SNECMA [FR]) 11 March 2009 (2009-03-11) abstract; figures 2-4 paragraphs [0015] - [0018] ----- | 1,2 |
| X | US 2003/163282 A1 (KRIEG DIETMAR [DE] ET AL) 28 August 2003 (2003-08-28) paragraphs [0008] - [0010], [0033]; figure 4 ----- | 1,2 |
| X | FR 2 446 494 A1 (GEOPHYSIQUE CIE GLE GEOPHYSIQUE CIE GLE [FR]) 8 August 1980 (1980-08-08) the whole document ----- -/-- | 1,2 |

| X | Further documents are listed in the continuation of Box C. | | X | See patent family annex. |

\* Special categories of cited documents :

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art.

"&" document member of the same patent family

| Date of the actual completion of the international search | Date of mailing of the international search report |
|---|---|
| 7 April 2011 | 13/04/2011 |

| Name and mailing address of the ISA/ | Authorized officer |
|---|---|
| European Patent Office, P.B. 5818 Patentlaan 2 NL - 2280 HV Rijswijk Tel. (+31-70) 340-2040, Fax: (+31-70) 340-3016 | Vollmer, Thorsten |

Form PCT/ISA/210 (second sheet) (April 2005)

## INTERNATIONAL SEARCH REPORT

International application No

PCT/RU2010/000253

C(Continuation).    DOCUMENTS CONSIDERED TO BE RELEVANT

| Category* | Citation of document, with indication, where appropriate, of the relevant passages | Relevant to claim No. |
|---|---|---|
| A | WO 2006/011145 A2 (SPIDER TECHNOLOGIES SECURITY L [IL]; GAN LIVNE [IL]; MICAN SEVER-YOAN) 2 February 2006 (2006-02-02) the whole document ----- | 1,2 |
| A | EP 1 053 917 A1 (SIEMENS AG [DE]) 22 November 2000 (2000-11-22) the whole document ----- | 1,2 |

Form PCT/ISA/210 (continuation of second sheet) (April 2005)

## INTERNATIONAL SEARCH REPORT

Information on patent family members

International application No

PCT/RU2010/000253

| Patent document cited in search report | | | Publication date | Patent family member(s) | | Publication date |
|---|---|---|---|---|---|---|
| EP 2034275 | A1 | | 11-03-2009 | CA | 2639184 A1 | 07-03-2009 |
| | | | | FR | 2920870 A1 | 13-03-2009 |
| | | | | JP | 2009063586 A | 26-03-2009 |
| | | | | US | 2009071224 A1 | 19-03-2009 |
| US 2003163282 | A1 | | 28-08-2003 | NONE | | |
| FR 2446494 | A1 | | 08-08-1980 | NONE | | |
| WO 2006011145 | A2 | | 02-02-2006 | BR | PI0513629 A | 13-05-2008 |
| | | | | CA | 2575213 A1 | 02-02-2006 |
| | | | | CN | 101002088 A | 18-07-2007 |
| | | | | EA | 200700355 A1 | 31-08-2007 |
| | | | | EP | 1779102 A2 | 02-05-2007 |
| | | | | JP | 2008507711 T | 13-03-2008 |
| | | | | KR | 20070062974 A | 18-06-2007 |
| | | | | US | 2009038397 A1 | 12-02-2009 |
| | | | | ZA | 200700689 A | 26-11-2008 |
| EP 1053917 | A1 | | 22-11-2000 | WO | 0071393 A1 | 30-11-2000 |

Form PCT/ISA/210 (patent family annex) (April 2005)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- RU 2229136
- RU 2229236

- RU 2383025